(19) Europäisches Patentamt
European Patent Office
Office européen des brevets

(11) **EP 3 465 635 B1**

(12) **FASCICULE DE BREVET EUROPEEN**

(45) Date de publication et mention de la délivrance du brevet:
**13.05.2020   Bulletin 2020/20**

(21) Numéro de dépôt: **17726273.0**

(22) Date de dépôt: **24.05.2017**

(51) Int Cl.:
*G07C 9/00* (2020.01)       *A43B 3/00* (2006.01)
*A63B 24/00* (2006.01)      *G08B 13/24* (2006.01)
*G08B 21/02* (2006.01)      *G01C 21/20* (2006.01)
*G01C 21/12* (2006.01)

(86) Numéro de dépôt international:
**PCT/EP2017/062601**

(87) Numéro de publication internationale:
**WO 2017/202948 (30.11.2017 Gazette 2017/48)**

(54) **DISPOSITIF DE LOCALISATION D'OBJETS OU DE PERSONNES MOBILES**

VORRICHTUNG ZUR ORTUNG VON SICH BEWEGENDEN OBJEKTEN ODER MENSCHEN

DEVICE FOR LOCATING MOVING OBJECTS OR PEOPLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.05.2016   FR 1600830**

(43) Date de publication de la demande:
**10.04.2019   Bulletin 2019/15**

(73) Titulaire: **Thales**
**92400 Courbevoie (FR)**

(72) Inventeur: **COUVET, Serge**
**95280 Jouy Le Moutier (FR)**

(74) Mandataire: **Lopez, Frédérique et al**
**Marks & Clerk France**
**Immeuble Visium**
**22 Avenue Aristide Briand**
**94117 Arcueil Cedex (FR)**

(56) Documents cités:
**WO-A1-01/53852          WO-A1-2005/031383**
**WO-A1-2008/101925   WO-A2-2016/042296**
**US-A1- 2013 338 961**

**Description**

**Domaine technique**

L'invention concerne le domaine de la localisation d'objets ou de personnes mobiles, et en particulier celui d'une telle localisation en intérieur.

**Etat de la technique**

La localisation d'objets ou de personnes évoluant dans un bâtiment pose différents problèmes liés à la fois à l'environnement lui-même (conditions thermiques, acoustiques, ou de visibilité par exemple) mais aussi à l'objet ou la personne (déplacement aléatoire ou prédéfini, vitesse de déplacement, port d'un équipement par exemple).

Un cas particulier de la localisation en intérieur est celui de l'évolution de combattants en milieu urbain qui peuvent se trouver en grand nombre dans des bâtiments à très faible visibilité (emploi de fumigènes par exemple), et qui doivent pouvoir être localisés individuellement en temps réel et sans recours à des techniques d'Infra Rouge (IR). L'environnement militaire impose aux systèmes de localisation en intérieur des contraintes spécifiques et rigoureuses.

Ainsi, ces systèmes doivent être fiables et robustes, afin de permettre une mesure labellisée de la position et du cap de chaque personne, à haute fréquence d'échantillonnage (par exemple à 100Hz), et à quelques centimètres près, pour couvrir par exemple les cas de pénétration dans un bâtiment par la technique bien connue dite de la chenille.

Par ailleurs, que ce soit lors d'exercices d'entraînement ou en mode opérationnel réel, les personnes à localiser peuvent être en très grand nombre et évoluer sur de grandes zones, par exemple sur des surfaces de bâtiment de l'ordre de 10000m$^2$ et plus, et être dans des interventions de durée variable jusqu'à plusieurs jours. Aussi, les solutions de localisation qui doivent équiper chaque individu doivent être d'un coût d'acquisition réduit, avoir une autonomie d'énergie suffisante et être suffisamment précises pour permettre des temps de réponse instantanés afin d'identifier individuellement et sans délai chaque personne.

Il existe des solutions de localisation en intérieur de personnes ou d'objets mais qui ne répondent pas à l'ensemble des exigences précitées.

Des solutions à base de géo-localisation existent. Une application répandue est celle de la géo-localisation des clients dans les grandes surfaces de vente, les aéroports ou les gares. L'inconvénient est que ces systèmes n'ont pas une précision fine, ni des performances d'échantillonnages qui soient compatibles avec l'entraînement militaire. Par exemple, les solutions à base de la technologie « WIFI » permet d'atteindre au mieux une précision de 15 cm, mais nécessite la mise en place d'un réseau d'antennes qui sont délicates à calibrer et à maintenir. De plus, le WIFI est très sensible aux déplacements de masses magnétiques, comme un fusil dans le domaine de mesures.

Des solutions à base de la technologie « Bluetooth 4.0 » basse énergie sont plutôt dédiées à la localisation de chariots dans les grandes surface commerciales. Elles ont des normes sévères de stabilité de puissance d'émission mais ont une fréquence d'échantillonnage bridée à 40Hz.

Des solutions dites « sols intelligents » sont étudiées, afin de pouvoir intégrer des capteurs piézoélectriques dans un revêtement de sol. Les marchés visés sont essentiellement le marché domestique, le marché sportif, par exemple pour détecter les chutes de personnes, ou en vue d'équiper des terrains de sport en salle pour la localisation des joueurs, lors de grands événements sportifs. Bien que ces approches doivent permettre de déterminer la zone où se trouve une personne, il n'y a pas de labellisation associée à la localisation et il n'est pas possible d'identifier formellement une personne.

Enfin, des solutions à base de caméras monoculaires ou stéréos existent. Outre le coût de ces approches et le fait qu'il faille une connexion réseau et une alimentation électrique disponible sur chaque senseur, les inconvénients majeurs de ces solutions sont qu'elles ne fonctionnent qu'avec un éclairage parfaitement contrôlé pour les caméras monoculaires et qu'elles ne fonctionnent pas en obscurité totale. Par ailleurs, de tels systèmes sont fragiles et demandent un étalonnage délicat en général.

Dans le domaine de l'entraînement au combat, deux grands types de solutions sont connues:
Une solution connue s'appuie sur un maillage tridimensionnel d'émetteurs Ultra Wide Band (UWB). La demande de brevet US 2006/0033662 (document de priorité GB20040016731 du 27-07-2004) de Ubisense décrit une telle solution. Un inconvénient de l'approche UWB est un coût d'investissement et de maintenance élevé. De plus, les émetteurs sont très sensibles aux réflexions électromagnétiques et le filtrage des positions est alors délicat, l'étalonnage (position exacte des antennes) étant très difficile pour obtenir des résultats à 15 cm près et il ne reste pas stable dans le temps. Enfin, pour des topologies de bâtiments complexes, il s'avère nécessaire de densifier les balises UWB car un utilisateur doit toujours être en vue directe d'au moins une balise.
Une autre solution connue est basée sur l'utilisation de tapis à boucles magnétiques qui consiste à installer des plaques de revêtements de sols comportant une boucle magnétique. Un système RFID permet de savoir sur quel carré se situe la personne labélisée. La demande de brevet WO2009/113948 A1 de Nyfelt décrit une telle solution. Bien qu'opérationnel, ce système présente l'inconvénient d'être très onéreux.

La demande de brevet WO 2016/042296 divulgue un dispositif pour localiser un objet ou une personne mobile dans un espace clos ou semi-clos, le dispositif comprenant des moyens de détection inertielle aptes à générer des données estimées d'accélération et de vitesse angulaire de l'objet ou de la personne et des moyens de calcul couplés aux moyens de détection inertielle aptes à traiter les données estimées pour générer des données de position et d'orientation de l'objet ou de la personne dans l'espace. Le dispositif de cette demande comprend également des moyens aptes à détecter la position de l'objet ou de la personne et à générer des données de référence datées de la position de l'objet ou de la personne. Les moyens de calcul combinent ces données de référence datées de la position et les données estimées provenant des moyens de détection inertielle pour générer des données de position et d'orientation de l'objet ou de la personne dans l'espace.

La demande de brevet WO 01/53852 divulgue un dispositif pour localiser un objet ou une personne dans un espace équipé d'une surface inductive.

Ainsi il existe le besoin d'une solution qui palie les différents inconvénients des solutions de l'état de l'art pour localiser en intérieur et labelliser des objets ou des personnes mobiles.

La présente invention telle que définie aux présentes revendications 1 à 11 répond à ce besoin.

**Résumé de l'invention**

Un objet de la présente invention est de proposer un dispositif pour permettre de localiser des objets ou des personnes mobiles dans un espace clos ou semi-clos.

Le principe de l'invention consiste à intégrer dans un sol à des endroits prédéfinis des moyens de détection magnétique de position et à équiper l'objet ou l'individu à localiser d'un dispositif combinant une détection magnétique avec une détection inertielle. L'interaction des moyens magnétiques sol/objet ou sol/personne permet une mesure de localisation générale d'un objet ou d'une personne, puis grâce au dispositif de mesure inertielle un ajustement est fait permettant une mesure très précise de la position et du cap de l'objet ou de la personne.

Avantageusement, le dispositif de l'invention permet de localiser avec précision tout objet ou toute personne en mouvement rapide.

Avantageusement, l'invention est peu coûteuse et simple à mettre en œuvre. En effet, les moyens de mesure magnétique sont intégrés dans un nombre prédéfini et limité de zones d'un sol, permettant de minimiser le coût lié à une surface à surveiller, le coût de pose des moyens magnétiques et le coût lié aux déplacements de mobilier dans des zones déjà meublées.

Toujours avantageusement, le dispositif de l'invention permet une mesure synchronisée de la capture du mouvement d'une personne et de la position de ses pas. De plus, le dispositif permet des mesures altimétriques des objets ou des personnes à localiser.

Le dispositif de l'invention est la combinaison d'une architecture intégrée associée à des méthodes algorithmiques permettant de résoudre la problématique complexe de la fusion d'horloges propres à différents capteurs, de la fusion de données de position, de vitesse et d'attitude entre des mesures temporelles uniformes et non uniformes. Le dispositif permet de gérer un grand nombre de points de mesure par unité de surface, et transférer en temps réel des données datées vers des serveurs fixes avec une fréquence d'échantillonnage supérieure à 50 Hz.

Un autre avantage du dispositif de l'invention est d'avoir une autonomie importante permettant son fonctionnement sur plusieurs jours sans besoin de rechargement de batterie.

A cet effet, l'invention a pour objet un dispositif pour localiser un objet ou une personne mobile dans un espace, ledit espace étant équipé d'au moins une surface inductive, le dispositif comprenant :

- des moyens de détection magnétique aptes à détecter la présence de l'objet ou de la personne sur ou à proximité de ladite au moins une surface inductive, et aptes à mesurer un angle de cap par deux points de mesure simultanée et générer des données d'angle de cap de référence datées de l'objet ou de la personne;

- des moyens de détection inertielle aptes à générer des données estimées d'accélération et de vitesse angulaire de l'objet ou de la personne; et

- des moyens de calcul couplés aux moyens de détection magnétique et inertielle aptes à combiner les données d'angle de cap de référence datées avec les données estimées pour générer des données corrigées de position et d'orientation de l'objet ou de la personne dans ledit espace.

Dans un mode de réalisation, les moyens de calcul comprennent des moyens pour déterminer une dérive des données estimées et des moyens pour calculer, à partir des données d'angle de cap de référence datées, une correction à appliquer aux données de position et d'orientation.

Dans un mode de réalisation, les moyens pour déterminer une dérive des données estimées sont activés quand l'objet ou la personne est détecté sur ou à proximité de ladite au moins une surface inductive.

Dans un mode de réalisation, les moyens de détection magnétique comprennent deux capteurs magnétiques aptes à mesurer de manière simultanée un angle de cap et générer des données d'angle de cap de référence.

Dans un mode de réalisation, le dispositif comprend de plus des moyens de communication aptes à transmettre des données générées vers un serveur distant. Les données transmises sont des données datées et des données estimées et les moyens de calcul sont couplés au serveur distant.

Dans un mode de réalisation, les moyens de communication sont des moyens de communication radio de type sans fil. Dans un autre mode de réalisation, les moyens de communication sont de type inductif.

Dans un mode de réalisation, le dispositif comprend de plus des moyens d'alimentation autonome.

Dans un mode de réalisation, les moyens de détection inertielle sont de type capteur inertiel AHRS (Attitude & Heading Reference System).

L'invention couvre aussi une chaussure équipée d'un dispositif tel que décrit.

**Description des figures**

Différents aspects et avantages de l'invention vont apparaître en appui de la description d'un mode préféré d'implémentation de l'invention mais non limitatif, avec référence aux figures ci-dessous :

La figure 1 illustre des repères liés d'origine et d'orientation ;

La figure 2 est une illustration générale des angles d'Euler ;

La figure 3 illustre schématiquement l'architecture du dispositif de l'invention dans un mode de réalisation ;

La figure 4 montre un exemple d'implémentation dans une semelle de chaussure du dispositif de l'invention selon un mode de réalisation ;

La figure 5 illustre schématiquement un bâtiment équipé de surfaces inductives selon les principes de l'invention ;

La figure 6 illustre un exemple de réalisation d'une surface inductive ;

Les Figures 7a à 7c illustrent des enchaînements d'étapes pour localiser un objet ou une personne selon les principes de l'invention ;

La figure 8 illustre le procédé de réalignement de la mesure de l'orientation selon un mode de réalisation de l'invention;

La figure 9 illustre le procédé de réalignement de la mesure de la position et de la vitesse selon un mode de réalisation de l'invention ;

La figure 10 illustre différents états de marche pour opérer le procédé de localisation de l'invention.

**Description détaillée de l'invention**

D'une manière générale, la problématique de l'invention est la localisation de personnes ou d'objets se trouvant à l'intérieur de bâtiments ou en extérieur proche. Un environnement particulier est celui de zones hautement sécurisées où le mouvement des personnes doit être contrôlé avec précision dans tout type d'atmosphère claire ou susceptible d'être opaque à la lumière (fumées, brouillard). L'invention vise à mesurer en dynamique avec une précision millimétrique ou centimétrique, la position et l'orientation d'un ou plusieurs repères liés aux pieds d'une personne, d'un animal ou d'un objet évoluant sur grande surface cloisonnée de murs, une surface par exemple de l'ordre de 10000 m2.

Ainsi, l'invention a pour objectif de déterminer en temps réel les coordonnées des origines et les valeurs des orientations de repères qui sont liés aux pieds d'une personne, pattes d'un animal, base d'un objet. De plus, l'invention permet l'identification des repères dont la mesure est faite. Avantageusement, l'invention peut s'appliquer tant à des personnes/animaux ou objets inertes, qu'à des personnes/animaux ou objets en déplacement sur un sol non nécessairement plat et horizontal.

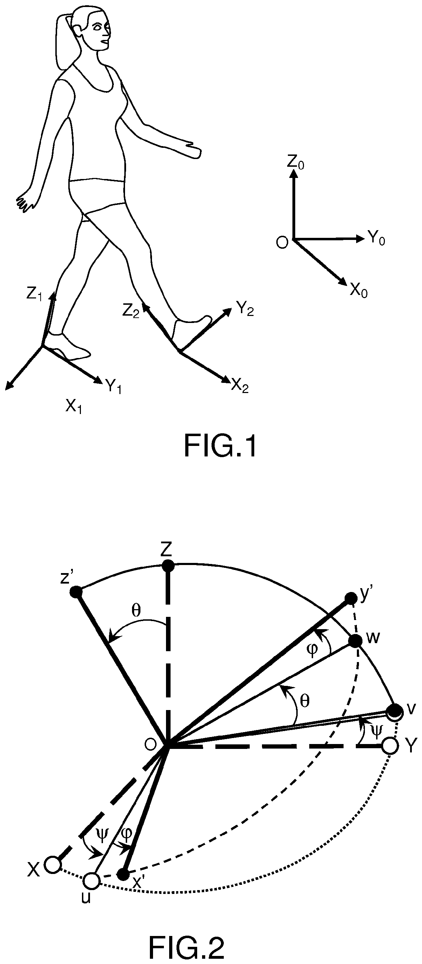

La figure 1 illustre des repères d'origine et d'orientation (X1, Y1, Z1) (X2, Y2, Z2) liés aux pieds d'une personne en déplacement. Un repère lié est défini par les coordonnées d'une origine et des angles d'Euler dans le repère géographique (X0, Y0, Z0) lié au sol. La figure 2 est une illustration des trois angles d'Euler couramment notés $\varphi$, $\theta$ et $\psi$

connus pour permettre de décrire l'orientation d'un solide. L'homme du métier pourra se reporter à tout ouvrage de mécanique du solide pour une plus ample description des angles d'Euler et de leur rotation servant à représenter l'orientation d'un solide par rapport à un repère, aussi appelé attitude.

Une autre forme connue de représentation mathématique de l'orientation et de la rotation d'objets en trois dimensions sont les quaternions. Dans un mode de réalisation préférentielle, l'invention utilise les quaternions pour mesurer les paramètres d'orientation et de rotation et calculer les réalignements à apporter aux mesures. L'homme du métier pourra se reporter à tout ouvrage de mathématique sur les nombres complexes pour une plus ample description des quaternions.

Le dispositif de l'invention permet que la mesure de la position de l'origine de chaque repère lié par rapport au sol soit échantillonnée à une fréquence supérieure à 40 Hz et que les estimations de l'orientation de chaque repère mobile soient effectuées à une fréquence compatible avec une reconstruction d'un mouvement de qualité en fonction du temps. De manière préférentielle, la fréquence d'échantillonnage pour l'estimation de l'orientation est faite à une fréquence supérieure à celle pour la détermination de la position, par exemple à une fréquence de 100 Hz. Dans la suite de la description, l'utilisation de l'expression « repère lié » pourra s'appliquer à un repère lié à une personne, un animal ou un objet.

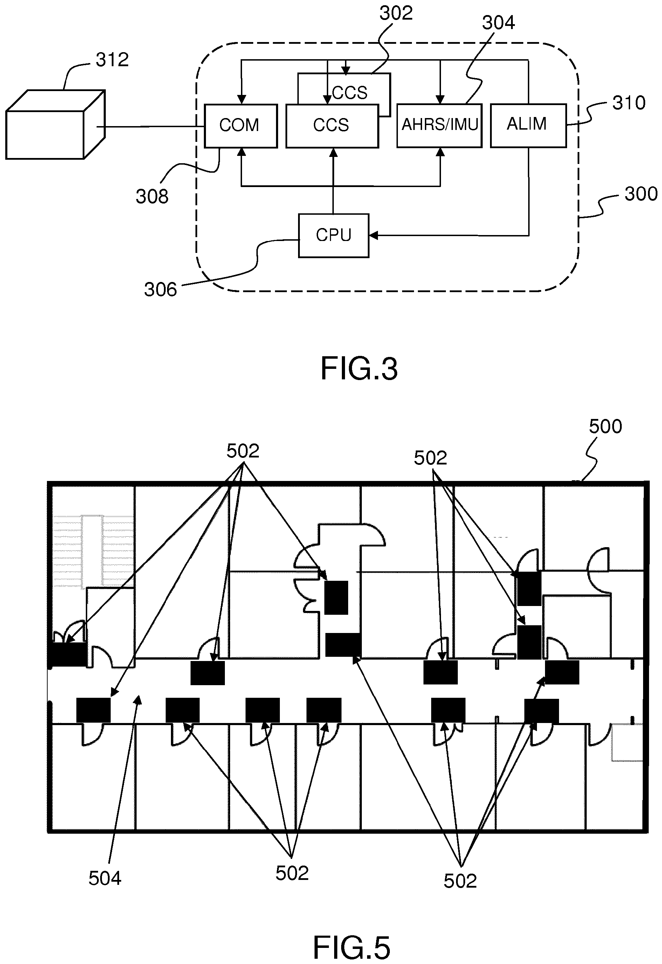

La figure 3 illustre schématiquement l'architecture du dispositif de l'invention dans un mode de réalisation. Le bloc (300) comprend un circuit de détection magnétique (302) apte à détecter un champ magnétique et effectuer des mesures de position et de vitesse d'un repère lié ; un circuit de détection inertielle (304) apte à fournir des données d'accélération et de vitesse angulaire d'un repère lié ; un circuit de calcul (306) couplé aux circuits de détection magnétique et inertiel permettant d'effectuer des calculs sur les différentes données produites par les capteurs magnétique et inertiel, mettre en forme les données à envoyer par un circuit de communication (308). Avantageusement, le dispositif de l'invention est autoalimenté et dispose d'une source d'énergie (310) autonome. Ainsi, le circuit de l'invention combine des mesures précises locales et asynchrones d'un capteur de mesures magnétiques à des mesures synchrones qui dérivent dans le temps fournies par un capteur inertiel, de façon à pouvoir extrapoler la position et l'attitude d'un repère lié quand il y a perte de la mesure magnétique due soit à un déplacement en hauteur (au delà de 0.1m), à des sauts, de grandes enjambées ou encore des figures artistiques.

De manière plus détaillée, le circuit de détection magnétique (302) comprend un capteur dit capteur cinématique sol (CCS) ayant dans un mode de réalisation préférentiel deux points de mesure (A, B) permettant une mesure dans un repère sol avec une précision millimétrique.

Dans un mode de réalisation, le circuit de détection inertielle (304) est un capteur inertiel de type « Inertial Measurement Unit » (IMU) selon l'anglicisme connu qui comprend six capteurs d'une précision métrologique :

- trois gyromètres mesurant les trois composantes d'un vecteur vitesse angulaire (vitesses de variation des angles de roulis, de tangage et de lacet); et
- trois accéléromètres mesurant les trois composantes d'un vecteur force spécifique. La force spécifique est la somme des forces extérieures autres que gravitationnelles divisée par la masse.

La centrale inertielle (IMU) peut aussi comprendre un magnétomètre 3D. Elle n'utilise aucune information extérieure au mobile, et est apte à intégrer les mouvements du mobile (accélération et vitesse angulaire) pour estimer son orientation (angles de roulis, de tangage et de cap), sa vitesse linéaire et sa position. L'estimation de position est relative au point de départ ou au dernier point de recalage. Le circuit (IMU) génère des données brutes qui sont envoyées vers le circuit de calcul (306) qui réalise en temps réel à partir des données reçues des six capteurs les calculs de filtrage et de séparation de la gravité et l'intégration des angles d'attitude (roulis, tangage et cap), du vecteur vitesse, et de la position.

Dans un mode de réalisation, le circuit de détection inertielle (304) est une centrale à inertie de type « Attitude and Heading Reference System" (AHRS) selon l'anglicisme connu qui comprend en plus des mêmes types de capteurs qu'une centrale IMU, un processeur interne comprenant des instructions de code permettant d'effectuer directement les opérations de filtrage des données des capteurs, de séparation de la gravité et de l'accélération propre du mobile, l'intégration des gyromètres pour obtenir les angles d'orientations du capteur inertiel et le recalage de cette orientation avec la gravité sur deux axes d'orientations (verticale et angle de cap). Ainsi les données fournies en sortie du capteur AHRS sont les angles d'orientation et leurs valeurs dérivées et/ou les quaternions équivalents.

Il est à noter que pour que le recalage angulaire de l'angle de tangage et de roulis soit au plus précis, le dispositif de l'invention doit être immobile pendant un certain temps, par exemple de l'ordre de 30 ms lors d'une phase d'appui au sol, afin que la direction du vecteur gravité puisse être détectée avec précision par le capteur inertiel. Dans un mode de réalisation, le dispositif est implémenté dans le talon d'une chaussure ou d'une botte. La marche impose lors de la phase d'appui au sol une immobilité dans le repère sol qui permet au capteur inertiel la mesure de la direction du vecteur gravité. Le vecteur gravité est alors recalé par analyse des accélérations et du module du vecteur gravité, ce qui assure une meilleure détermination de l'angle de roulis et de tangage.

Par ailleurs, l'angle de cap dérivant dans le temps, il doit être recalé par rapport à une valeur de cap de référence. Dans une implémentation préférentielle, la mesure du cap de référence est faite avec deux mesures de position simultanées effectuées au moment d'une phase de contact sol.

Le circuit de communication (308) comprend des composants connus de l'homme de l'art permettant l'envoi des données issues des capteurs et/ou du processeur vers un serveur distant (312). L'envoi des données peut opérer via une liaison radio de type sans fil selon toute technologie connue et/ou via une liaison de type inductif lors des passages du repère lié sur des plaques inductives.

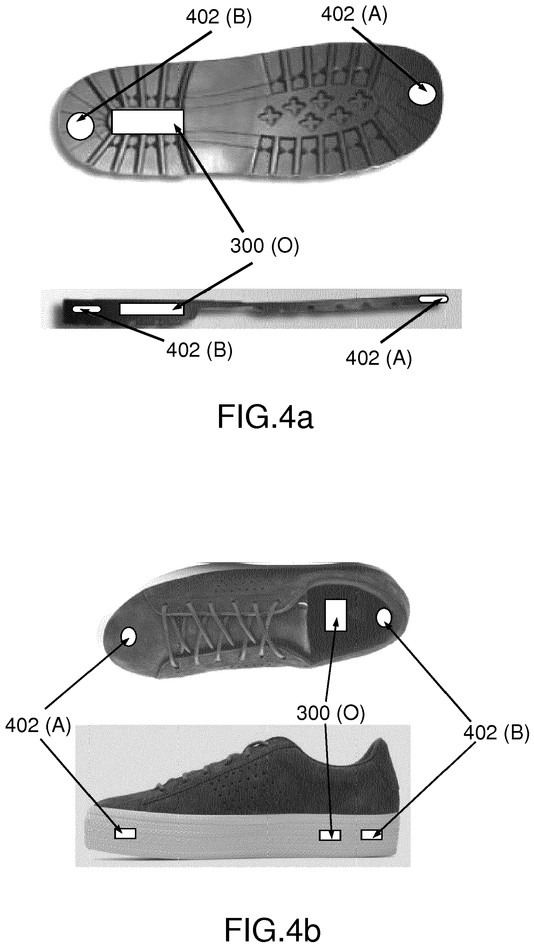

La figure 4 illustre un exemple d'implémentation du dispositif de l'invention dans une semelle de chaussure. La figure 4a montre en vue de dessous et de profil l'implémentation du dispositif de l'invention sous la forme d'un boitier (300) intégré comprenant l'ensemble des composants décrits en référence à la figure 3 et positionné dans la partie arrière de la semelle. Dans le mode de réalisation illustré, deux composants distants (402(A), 402(B)) sont intégrés dans la partie avant et la partie arrière de la semelle permettant deux points de mesure (A, B) inductive lors du passage de la semelle sur ou à proximité d'une zone inductive d'un sol. La figure 4b illustre une chaussure équipée d'une semelle instrumentée selon la figure 4a dans laquelle le boitier (300) se situe dans la zone du talon de la chaussure. Pour des points de mesure (A, B) distants d'une trentaine de centimètres pouvant correspondre aux extrémités d'une chaussure, il est possible de mesurer à 0.1 degré près un angle de cap du repère lié à la chaussure. L'homme du métier comprend que l'exemple montré n'est pas limitatif et que toute variante peut être envisagée dans la forme de la semelle, la chaussure, l'emplacement du boitier et des points de mesure. Ainsi, dans une variante non illustrée, le boitier peut être apparent et positionné sur le dessus d'une chaussure, être par exemple retenu par une attache auto-aggripante. Dans une autre forme de variante, le boitier peut être porté par la personne, l'animal ou l'objet sans altérer le principe de fonctionnement de l'invention.

La figure 5 illustre schématiquement un bâtiment (500) équipé d'une pluralité de surfaces inductives permettant d'opérer la méthode de l'invention. Dans cet exemple, le sol d'une enceinte (504) où la localisation d'un repère lié doit être réalisée, est partiellement pavé de surfaces ou nappes inductives (502). Les nappes peuvent être jointes ou disjointes. L'emplacement des nappes est prédéfini par construction dans le repère sol. La position des nappes inductives étant connue, la méthode de l'invention permet d'effectuer une mesure de la position et de l'orientation d'un repère lié de façon très précise. Avantageusement, afin de limiter le coût de l'installation d'un sol entièrement inductif, des nappes inductives en nombre limité sont dispersées sur le sol, placées en mosaïque ou placées à des endroits stratégiques de manière à assurer qu'une personne marche dessus de façon incontournable lors d'un déplacement. En opération, le contact d'une chaussure avec le sol sur une nappe inductive (502) permet de déterminer par le capteur CCS (302) une position millimétrique dans le repère sol et un angle de cap. Ces informations de référence sont utilisées pour recaler les calculs d'odométrie utilisant les mesures issues du capteur inertiel (304) qui dérivent dans le temps.

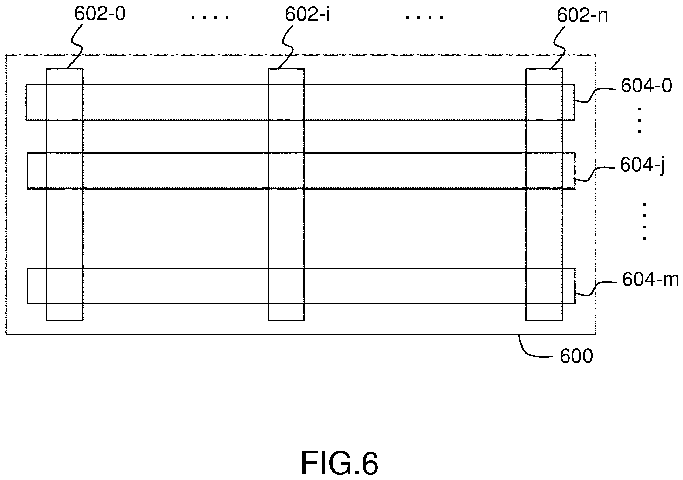

La figure 6 illustre un exemple de réalisation d'une nappe inductive (600) pour équiper un sol en vue d'opérer la méthode de l'invention. La taille des nappes inductives peut varier selon le lieu à équiper. Une telle nappe comprend un maillage de fils de câblage organisé en colonnes (602-i) et en lignes (604-j). Le tapis peut être réalisé dans différentes matières, linoléums, résines, bois pour ne citer que quelques exemples. Les nappes inductives peuvent être plates ou non. Dans le cas de nappes non plates, les coordonnées du repère lié qui vont être mesurées sont des coordonnées curvilignes qui seront traitées de manière adéquate.

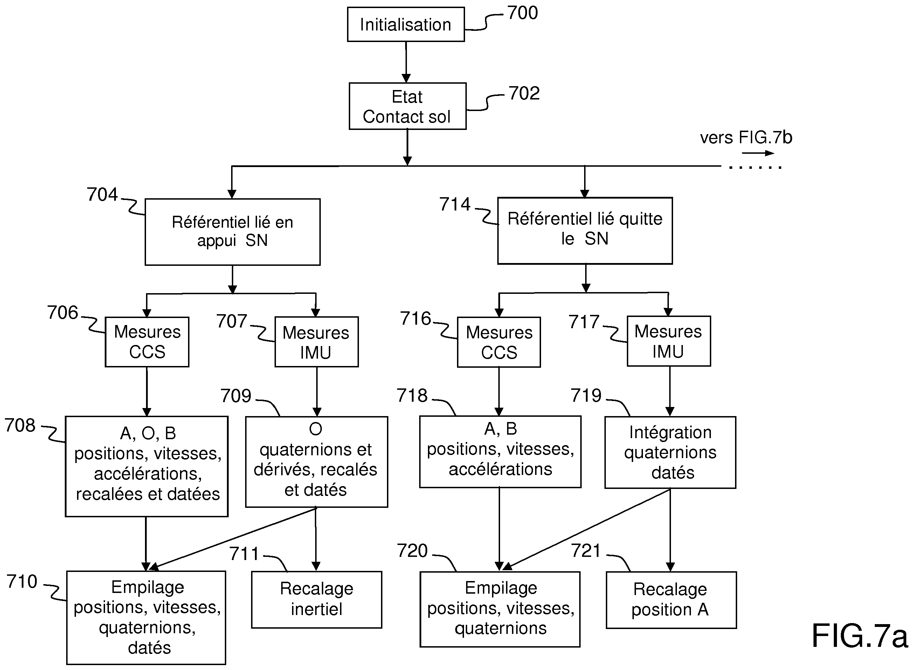

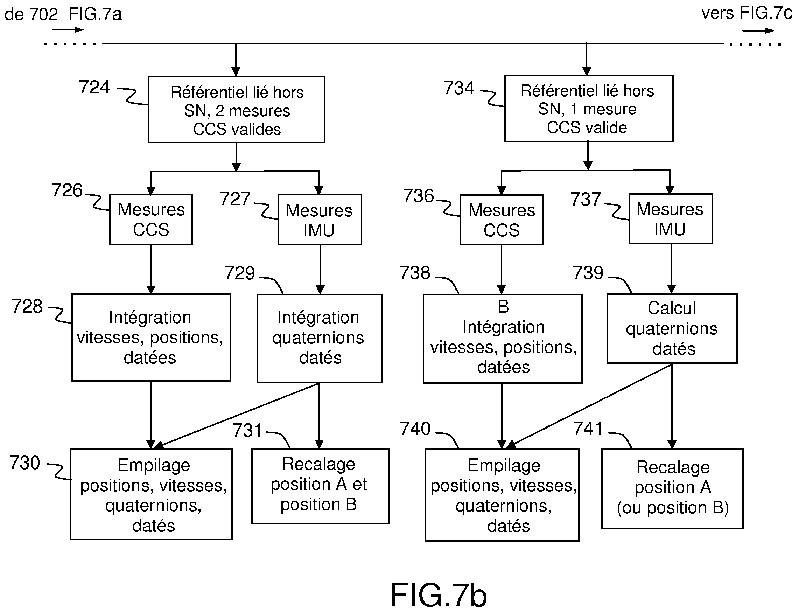

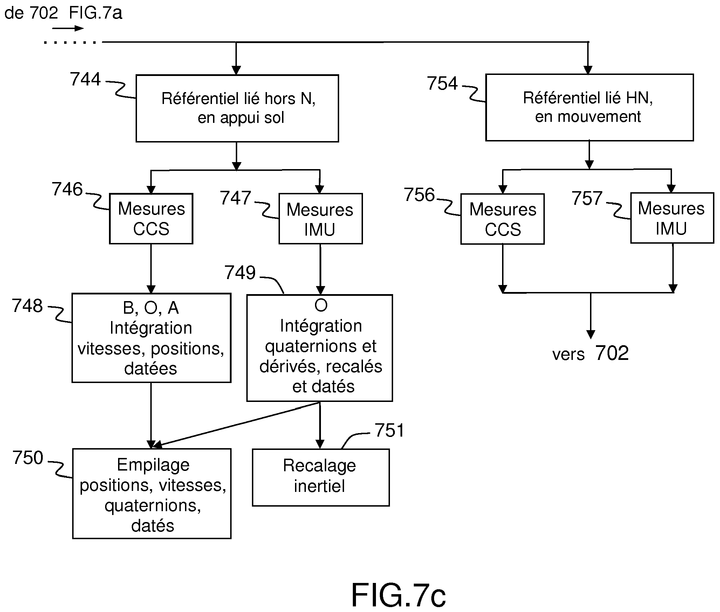

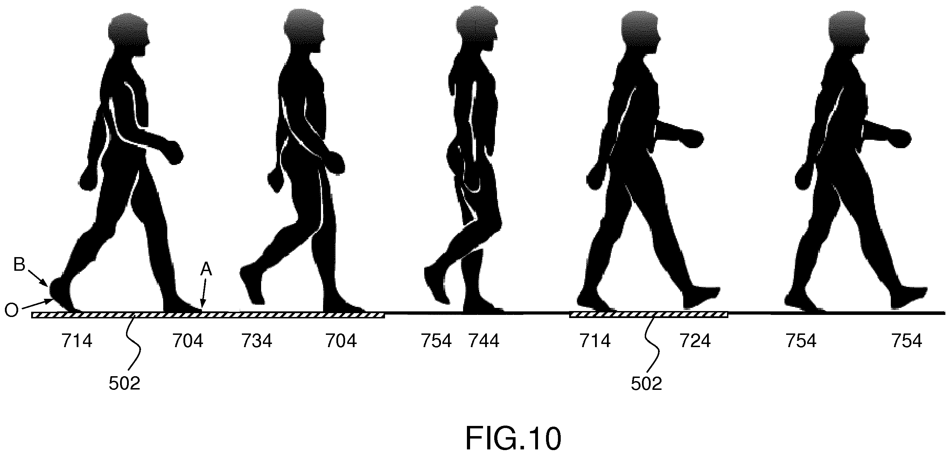

Les figures 7a à 7c illustrent les enchainements des étapes permettant de localiser un objet ou une personne selon la position du repère lié équipant l'objet ou la personne par rapport au sol. En effet, le procédé de l'invention permet de déterminer selon que le repère lié, qui pour des raisons de clarté de description est considéré intégré dans des chaussures, est en phase d'appui ou phase oscillante, sur ou au-dessus ou en dehors d'une nappe inductive. La figure 10 illustre les états d'une marche bipède à partir desquels différentes étapes selon les figures 7a à 7c sont exécutées.

Dans un souci de simplification, le procédé est décrit pour une personne portant des chaussures équipées chacune d'un dispositif (300) ayant un repère lié (0) et deux points de mesures (A, B) et évoluant dans un espace où des nappes inductives (502) sont positionnées de façon éparse mais dont la position dans l'espace géographique est connue.

Quand la personne pose une première fois au moins un pied sur une surface inductive, le système initialise (700) en attitude et en position le capteur inertiel (304) de la chaussure.

Le procédé permet ensuite de déterminer (702) la proximité de la chaussure avec la surface d'une nappe inductive (502). En particulier, le procédé permet de distinguer des états différents (figure 10) emportant l'activation de différents modes opératoires (figures 7a à 7c) selon que :

> La marche est sur ou au-dessus d'un sol avec nappe inductive « SN » (704, 714, 724, 734), où :

- en (704) les points A et B sont immobiles et le pied posé en appui sur le sol nappe SN ;

- en (714) le point A est immobile par rapport au sol nappe SN et le point B est mobile ;

- en (724) les points A, O, B sont au-dessus du sol nappe SN mais les mesures des points A et B sont valides ;

- en (734) les points A, O, B sont au-dessus du sol nappe SN mais plus éloignés du sol, une seule mesure des points A ou B est valide.

➢ La marche est sur ou au-dessus d'un sol sans nappe inductive « HN » (744, 754) où :

- en (744) les points A et B sont posés en appui sur le sol HN ;

- en (754) les points A, O, B ne touchent pas le sol.

Après l'étape (704, 714, 724, 734, 744, 754) de détermination de l'état du référentiel par rapport au sol, le procédé entre dans un relevé de mesures des différents capteurs magnétiques CCS (706, 716, 726, 736, 746, 756) et inertiels IMU (707, 717, 727, 737, 747, 757).

Quand les mesures d'induction (706, 716, 726, 736, 746) sont validées, les positions (X, Y, Z) des points A et B sont mesurées dans le repère sol nappe SN. Les positions et leurs dérivées temporelles dans le repère du sol (X, Y, Z) des points A et B et du point de référence 0 sont alors déterminées. Le cap du repère lié par rapport au sol est alors parfaitement connu, par exemple par rapport au repère sol, valant :

$$\psi = a\tan2((X_A - X_B)/(Y_A - Y_B));$$

Pour les mesures inertielles (707, 717, 727, 737, 747), avantageusement une centrale inertielle mesure exactement l'accélération terrestre $-\vec{g}$ et non pas $\vec{\Gamma} - \vec{g}$ car le pied est immobile par rapport au sol. La centrale inertielle fournit au moins les mesures sous forme de quaternions ou d'angles d'Euler d'attitude corrigés dans le cas d'une centrale inertielle de type AHRS. Dans le cas d'un centrale inertielle de type AHRS, un microcalculateur interne effectue le filtrage et les corrections des mesures. Une centrale inertielle de type IMU mesure $\vec{\Gamma} - \vec{g}$ et il est possible de mesurer la gravité dans le repère de la centrale inertielle pour trouver les accélérations du référentiel lié à la chaussure, qui se décomposent en accélérations linéaires propres et accélérations de compositions. Dans le cas d'un IMU, les calculs sont faits sur un serveur. Le procédé permet ensuite de dater et corriger les mesures valides.

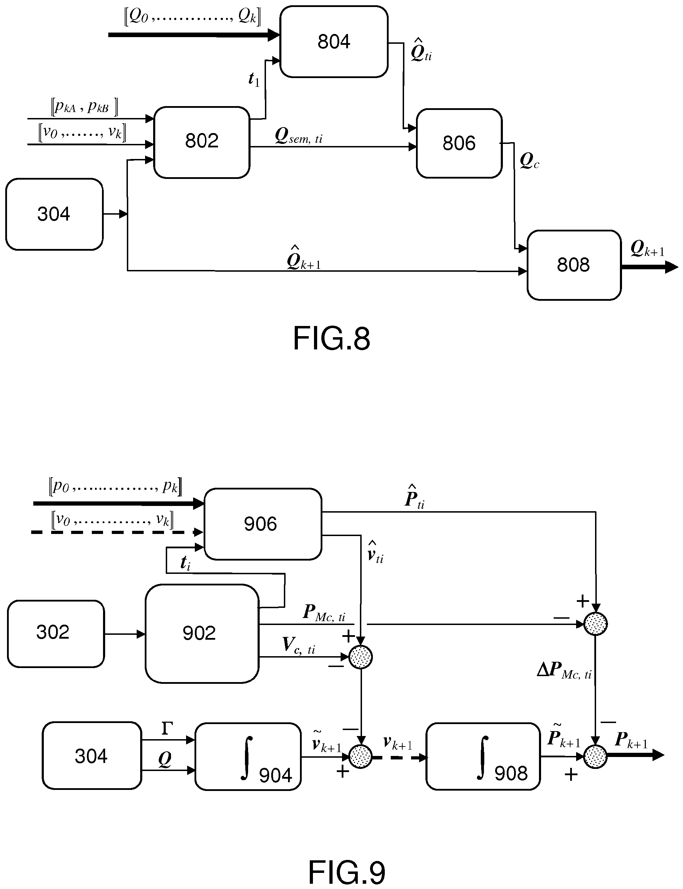

La figure 8 montre un diagramme d'ordonnancement des étapes pour déterminer à l'instant $t_k$ et pour dater les mesures du capteur inertiel corrigées, correspondant aux boites (709, 719, 729, 739, 749).

Les références dans la figure 8 sont données en fin de description.

Après l'étape des mesures d'induction, le procédé permet (708, 718, 728, 738, 748, 748) de réaligner et déterminer à un instant $t_k$ les accélérations, vitesses et positions. Quand une estimation de la position inertielle est obtenue au moment où la mesure CCS est effectuée, le processus de réalignement de position consiste à calculer la différence entre les deux mesures de positions inductive et inertielle au moment où la mesure sur le sol nappe SN a été effectuée et à l'appliquer comme une correction pour le temps présent. Avantageusement, l'ajout d'un modèle biomécanique sur cette opération permet de diminuer le bruit de la mesure brute du capteur, voire d'éliminer une mesure aberrante isolée.

La figure 9 montre un diagramme d'ordonnancement des étapes de détermination à l'instant $t_k$ et de réalignement des accélérations, vitesses et positions des points A, 0 et B. La boite (902) illustre le calcul des positions et des vitesses à partir des mesures du capteur CCS (302), la boite (906) illustre le calcul de l'estimation de la correction à appliquer aux positions et vitesses. Le point essentiel de ce processus est de corriger la vitesse donnée par le capteur inertiel (304) après une première intégration (904) puis de corriger la position après la seconde intégration (908).

Les références dans la figure 9 sont données en fin de description.

Après correction des mesures, les données calculées et datées pour les quaternions et les positions et vitesses linéaires sont stockées (710, 720, 730, 740, 750) pour constituer l'historique de mesures (positions, vitesses, quaternions) et permettre les calculs au cycle suivant par les modules (804) et (906).

Les blocs (711, 721, 731, 741, 751) représentent le processus de réaction des offsets de la centrale inertielle ou des constantes d'intégration pour le calcul des vitesses et position. Les données d'angle d'attitude, de position, de gravité permettent de « ré-instancier » les chaines d'intégration de vitesse et positions et la centrale inertielle (IMU ou AHRS). Par exemple quand le pied est posé immobile au sol, l'accélération mesurée est exactement égale à $-\vec{g}$, les vitesses linéaires sont nulles et les positions des points A et B sont celles mesurés par le capteur CCS, les angles d'attitudes sont constants : $\theta = \theta_0; \varphi = \varphi_0;$.

Un filtrage type Kalman peut être ajouté suivant la qualité des mesures de positions obtenue.

Il est à noter que la chaine des calculs (714 à 721) est quasi identique à celle (704 à 711), les différences étant que la centrale inertielle n'est pas réinstanciée (angles d'attitude excepté Ψ et ses dérivées temporelles). Seules les positions de A et de B et leurs dérivées temporelles servent à recaler la chaine d'intégration (718) et la position du point 0 référence du repère lié est calculée à partir des données de la centrale inertielle.

Pour les cas (724) où une chaussure est à proximité de la nappe inductive mais à une distance telle que la mesure de position devient moins effective due à un décroissement du champ magnétique, le procédé permet de prendre en compte les données fournies par le capteur inertiel pour recalculer la trajectoire du point de référence et les angles d'Euler du repère lié. La chaine des calculs (724 à 731) est quasi identique à celle (714 à 721), hormis le cap de la chaussure qui n'est pas calculé par les positions de A et de B mais par intégrations des mesures gyroscopiques de la centrale inertielle. Un autre mode de réalisation possible est de construire un filtre à partir des deux méthodes de calcul : a) mesures IMU intégrées et b) à partir des mesures de positions A et B par le CCS.

Pour les cas (734) où une chaussure est en l'air mais trop éloignée de la surface inductive pour fournir une seule mesure CCS valide, la chaine de calculs (734 à 741) est quasi identique à celle (724 à 731) mais pour une seule mesure.

Pour les cas (744) où la position de la chaussure est telle que quand elle revient à plat sur le sol, elle est hors d'une surface inductive, le procédé permet de réaligner la position en altitude (Z) et deux angles d'attitude (le roulis et le tangage), la position en (X,Y) dans l'espace géographique dérivant en fonction des caractéristiques des accéléromètres. La chaine de calculs (744 à 751) est quasi identique à celle (704 à 711) hormis le fait qu'il n'est pas possible de recaler les positions. Les angles d'attitude et leurs dérivées (hormis Ψ) sont nuls, les altitudes $Z_A$, $Z_B$, $Z_O$ sont recalées.

Pour les cas (754) où aucune mesure CCS n'est disponible, le procédé reste en attente (702) de la détection d'un nouvel état où une mesure devient valide.

Ainsi, chaque fois qu'une personne passe sur une nappe inductive le capteur inertiel est réinitialisé en attitude et position. A partir des informations corrigées, le procédé permet de reconstruire la trajectoire suivie par la personne, l'animal ou l'objet mobile.

Avantageusement, selon différents modes de réalisation, la fusion des données des capteurs peut être effectuée soit au niveau du processeur (306) du dispositif de l'invention et le résultat est envoyé à un serveur distant (312) pour le calcul de la trajectoire, soit peut être effectuée au niveau d'un processeur d'un serveur distant (312) après envoi des données brutes des capteurs.

Entre autres avantages, le dispositif de l'invention permet :

- un repérage de plusieurs personnes à quelques centimètres près dans un référentiel bâtiment, et une labellisation de chaque personne, quelques soient les conditions d'opacité et de clarté de l'atmosphère ;
- une capture d'une position précise, échantillonnée à une fréquence de 50 Hz ;
- une mesure de la position des pas d'une personne ou objet mobile ou animal et une capture de mouvement synchronisé ;
- une gamme d'utilisation dans une plage de température étendue, allant de -20°C à + 60°C ;
- une autonomie de fonctionnement importante, de l'ordre de la semaine ;
- une utilisation compatible avec toutes les exigences de la simulation live où l'infrarouge est interdit, les solutions optiques inopérantes en cas de poussières fumées ;
- un fonctionnement sur un sol horizontal et sur des zones non planes.

Références des figures 8 et 9 :

| $[Q_0, \ldots\ldots\ldots, Q_k]$ | Historique des quaternions datés |
|---|---|
| $t_i$ | Temps de l'estimation "contact sol" |
| $Q_{sem, ti}$ | Estimation des angles |
| $\hat{Q}_{ti}$ | Estimation du quaternion lié au trièdre de référence de la semelle au temps $t_i$ |
| $Q_c$ | Correction totale à appliquer pour réaligner le trièdre avec la dernière estimation valide du "contact sol" |
| $\hat{Q}_{k+1}$ | Estimation du quaternion d'orientation |
| $Q_{k+1}$ | Mise à jour de l'orientation du repère de référence après réalignement angulaire |

| | |
|---|---|
| $[p_0, \ldots\ldots\ldots p_k]$ | Historique des positions SN |
| $[v_0, \ldots\ldots\ldots, v_k]$ | Historique des vitesses SN |
| $t_i$ | Temps auquel a été effectué la mesure dans la base de temps du SN |
| $P_{Mc, ti}$ | Mesure de position SN dans la base de temps SN |
| $\tilde{P}_{k+1}$ | Estimation de position fournie par le capteur inertiel après correction des intégrations de vitesses |
| $P_{k+1}$ | Mise à jour de la position du CO dans le repère sol après réalignement AHRS et mesures SN |
| $\Delta P_{Mc, ti}$ | Correction à appliquer pour réaligner la position donnée par la centrale inertielle avec la dernière |

**Revendications**

1. Un dispositif pour localiser un objet ou une personne mobile dans un espace, ledit espace étant équipé d'au moins une surface inductive, le dispositif comprenant :

   - des moyens de détection magnétique aptes à détecter la présence de l'objet ou de la personne sur ou à proximité de ladite au moins une surface inductive et aptes à mesurer un angle de cap par deux points de mesure simultanée et générer des données d'angle de cap de référence datées de l'objet ou de la personne;
   - des moyens de détection inertielle aptes à générer des données estimées d'accélération et de vitesse angulaire de l'objet ou de la personne; et
   - des moyens de calcul couplés aux moyens de détection magnétique et inertielle aptes à combiner les données d'angle de cap de référence datées avec les données estimées pour générer des données corrigées de position et d'orientation de l'objet ou de la personne dans ledit espace.

2. Le dispositif selon la revendication 1 dans lequel les moyens de calcul comprennent des moyens pour déterminer une dérive des données estimées et des moyens pour calculer, à partir des données d'angle de cap de référence datées, une correction à appliquer aux données de position et d'orientation.

3. Le dispositif selon la revendication 2 dans lequel les moyens pour déterminer une dérive des données estimées sont activés quand l'objet ou la personne est détecté sur ou à proximité de ladite au moins une surface inductive.

4. Le dispositif selon l'une quelconque des revendications 1 à 3 dans lequel les moyens de détection magnétique comprennent deux capteurs magnétiques aptes à mesurer de manière simultanée un angle de cap et générer des données d'angle de cap de référence.

5. Le dispositif selon l'une quelconque des revendications 1 à 4 comprenant de plus des moyens de communication aptes à transmettre des données générées vers un serveur distant.

6. Le dispositif selon la revendication 5 dans lequel les données transmises sont les données datées et les données estimées et dans lequel les moyens de calcul sont couplés au serveur distant.

7. Le dispositif selon les revendications 5 ou 6 dans lequel les moyens de communication sont des moyens de communication radio de type sans fil.

8. Le dispositif selon les revendications 5 ou 6 dans lequel les moyens de communication sont des moyens de communication de type inductif.

9. Le dispositif selon l'une quelconque des revendications 1 à 8 comprenant de plus des moyens d'alimentation autonome.

10. Le dispositif selon l'une quelconque des revendications 1 à 9 dans lequel les moyens de détection inertielle sont de type capteur inertiel AHRS.

11. Chaussure intégrant un dispositif selon l'une quelconque des revendications 1 à 10.

**EP 3 465 635 B1**

## Patentansprüche

1. Vorrichtung zum Orten eines sich in einem Raum bewegenden Objekts oder einer sich in einem Raum bewegenden Person, wobei der Raum mit mindestens einer induktiven Fläche ausgerüstet ist, wobei die Vorrichtung Folgendes beinhaltet:

   - magnetische Detektionsmittel, welche in der Lage sind, das Vorhandensein des Objekts oder der Person auf der oder in der Nähe der mindestens einen induktiven Fläche zu erkennen und in der Lage sind, einen Kurswinkel durch zwei gleichzeitige Messpunkte zu messen und datierte Referenz-Kurswinkeldaten des Objekts oder der Person zu erzeugen;
   - Mittel zur Trägheitsdetektion, welche in der Lage sind, geschätzte Winkelbeschleunigungs- und geschwindigkeitsdaten des Objekts oder der Person zu erzeugen; und
   - Berechnungsmittel, welche mit den magnetischen und den Trägheitsdetektionsmitteln gekoppelt und in der Lage sind, die datierten Referenz-Kurswinkeldaten mit den geschätzten Daten zu kombinieren, um korrigierte Positions- und Ausrichtungsdaten des Objekts oder der Person in dem Raum zu erzeugen.

2. Vorrichtung nach Anspruch 1, bei welcher die Berechnungsmittel Mittel zum Bestimmen eines Drifts der geschätzten Daten und Mittel zum Berechnen, anhand der datierten Referenz-Kurswinkeldaten, einer auf die Positions- und Ausrichtungsdaten anzuwendenden Korrektur beinhalten.

3. Vorrichtung nach Anspruch 2, bei welcher die Mittel zum Bestimmen eines Drifts der geschätzten Daten aktiviert werden, wenn das Objekt oder die Person auf der oder in der Nähe der mindestens einen induktiven Fläche erkannt wird.

4. Vorrichtung nach einem der Ansprüche 1 bis 3, bei welcher die magnetischen Detektionsmittel zwei magnetische Sensoren beinhalten, welche in der Lage sind, gleichzeitig einen Kurswinkel zu messen und Referenz-Kurswinkeldaten zu erzeugen.

5. Vorrichtung nach einem der Ansprüche 1 bis 4, welche zudem Kommunikationsmittel beinhaltet, welche in der Lage sind, erzeugte Daten an einen Remote-Server zu übertragen.

6. Vorrichtung nach Anspruch 5, bei welcher die übertragenen Daten die datierten Daten und die geschätzten Daten sind, und bei welcher die Berechnungsmittel mit dem Remote-Server gekoppelt sind.

7. Vorrichtung nach Anspruch 5 oder 6, bei welcher die Kommunikationsmittel Mittel vom Typ drahtlose Funkkommunikationsmittel sind.

8. Vorrichtung nach Anspruch 5 oder 6, bei welcher die Kommunikationsmittel Mittel vom Typ induktive Kommunikationsmittel sind.

9. Vorrichtung nach einem der Ansprüche 1 bis 8, welche zudem Mittel zur autonomen Speisung beinhaltet.

10. Vorrichtung nach einem der Ansprüche 1 bis 9, bei welcher die Trägheitsdetektionsmittel Mittel vom Typ AHRS-Trägheitssensor sind.

11. Schuh, beinhaltend eine Vorrichtung nach einem der Ansprüche 1 bis 10.

## Claims

1. A device for locating a moving object or person in a space, said space being equipped with at least one inductive surface, the device comprising:

   - magnetic detection means able to detect the presence of the object or of the person on or close to said at least one inductive surface, and able to measure a heading angle by way of two simultaneous measurement points and to generate dated reference heading angle data for the object or for the person;
   - inertial detection means able to generate estimated angular speed and acceleration data for the object or for the person; and

- calculation means coupled to the magnetic and inertial detection means, able to combine the dated reference heading angle data with the estimated data in order to generate corrected position and orientation data for the object or for the person in said space.

2. The device as claimed in claim 1, wherein the calculation means comprise means for determining a drift of the estimated data and means for calculating, on the basis of the dated reference heading angle data, a correction to be applied to the position and orientation data.

3. The device as claimed in claim 2, wherein the means for determining a drift of the estimated data are activated when the object or the person is detected on or close to said at least one inductive surface.

4. The device as claimed in any one of claims 1 to 3, wherein the magnetic detection means comprise two magnetic sensors able to simultaneously measure a heading angle and generate reference heading angle data.

5. The device as claimed in any one of claims 1 to 4, additionally comprising communication means able to transmit generated data to a remote server.

6. The device as claimed in claim 5, wherein the transmitted data are dated data and estimated data, and wherein the calculation means are coupled to the remote server.

7. The device as claimed in claim 5 or 6, wherein the communication means are wireless radio communication means.

8. The device as claimed in claim 5 or 6, wherein the communication means are inductive communication means.

9. The device as claimed in any one of claims 1 to 8, further comprising autonomous power supply means.

10. The device as claimed in any one of claims 1 to 9, wherein the inertial detection means are AHRS inertial sensors.

11. A shoe integrating a device as claimed in any one of claims 1 to 10.

FIG.1

FIG.2

FIG.3

FIG.5

402 (B)  402 (A)

300 (O)

402 (B)  402 (A)

# FIG.4a

300 (O)

402 (A)  402 (B)

# FIG.4b

602-0 . . . . 602-i . . . . 602-n

604-0

604-j

604-m

600

FIG.6

FIG.7a

EP 3 465 635 B1

724 — Référentiel lié hors SN, 2 mesures CCS valides

734 — Référentiel lié hors SN, 1 mesure CCS valide

726 — Mesures CCS

727 — Mesures IMU

736 — Mesures CCS

737 — Mesures IMU

728 — Intégration vitesses, positions, datées

729 — Intégration quaternions datés

738 — B Intégration vitesses, positions, datées

739 — Calcul quaternions datés

730 — Empilage positions, vitesses, quaternions, datés

731 — Recalage position A et position B

740 — Empilage positions, vitesses, quaternions, datés

741 — Recalage position A (ou position B)

FIG.7b

EP 3 465 635 B1

744 — Référentiel lié hors N,
en appui sol

754 — Référentiel lié HN,
en mouvement

746 — Mesures
CCS

747 — Mesures
IMU

756 — Mesures
CCS

757 — Mesures
IMU

748 — B, O, A
Intégration
vitesses, positions,
datées

749 — O
Intégration
quaternions et
dérivés, recalés
et datés

vers 702

750 — Empilage
positions, vitesses,
quaternions,
datés

751 — Recalage
inertiel

**FIG.7c**

EP 3 465 635 B1

18

FIG.8

FIG.9

B
O
A

714    502    704    734    704    754    744    714    502    724    754    754

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060033662 A
- GB 20040016731 A
- WO 2009113948 A1, Nyfelt
- WO 2016042296 A
- WO 0153852 A